# EUROPÄISCHE PATENTSCHRIFT

(11) **EP 0 584 684 B1**
(45) Veröffentlichungstag und Bekanntmachung des Hinweises auf die Patenterteilung: **21.05.1997**
(21) Anmeldenummer: 93113060.3
(22) Anmeldetag: 14.08.1993
(51) Int. Cl.: H04N 11/12, H04N 7/00, H04N 5/44

(54) **Farbfernsehsystem mit einer empfangsseitigen Steuereinrichtung zum Umschalten der Signalverarbeitungsverfahren eines Decoders**
Colour television system with a control device on the receiver side for selecting the signal processing method of a decoder
Système de télévision en couleur avec un dispositif de contrôle au niveau du récepteur pour sélectionner la méthode de traitement du signal d'un décodeur

(30) Priorität: 21.08.1992 DE 4227664
(43) Veröffentlichungstag der Anmeldung: 02.03.1994
(73) Patentinhaber: Grundig E.M.V. Elektro-Mechanische Versuchsanstalt Max Grundig GmbH & Co. KG, 90762 Fürth (DE)
(72) Erfinder: Kays, Rüdiger Dr., GRUNDIG E.M.V., holländ. Stiftung & Co. KG D-90748 Fürth (DE)

(56) Entgegenhaltungen:
- EP-A- 0 402 992
- WO-A-91/11882
- US-A- 4 740 999
- US-A- 4 974 081
- PATENT ABSTRACTS OF JAPAN vol. 16, no. 112 (E-1180) & JP-A-03 284 091 (NEC HOME ELECTRON LTD.) 13. Dezember 1991

## Beschreibung

Die Erfindung betrifft ein Farbfernsehsystem mit Einrichtungen zur Codierung und Decodierung von Farbfernsehsignalen, bei dem sende- und empfangsseitig nach Maßgabe eines Steuersignals eine Umschaltung zwischen verschiedenen Signalverarbeitungsverfahren erfolgt.

In den zurückliegenden Jahren sind verstärkt Mehrnormen-Fernsehempfänger entwickelt worden. Die Gründe hierfür liegen darin, daß mit derartigen Geräten ein weitaus größerer Teil des Weltmarktes bedient werden kann und daß durch Satelliten-Fernsehen und Kabelfernsehnetze in weiten Gebieten Fernsehsendungen, die nach verschiedenen Standards ausgestrahlt werden, empfangen werden können. Weltweit existieren 13 verschiedene Fernsehnormen (z.B. PAL, SECAM, NTSC-3,58 MHz, NTSC-4,3 MHz), nimmt man die verschiedenen Verfahren zur Übertragung der zweiten Toninformation hinzu, sind dies derzeit 17 verschiedene Fernsehnormen.

Zur automatischen Umschaltung sind die Mehrnormen-Fernsehempfänger mit einem geeigneten Farbdecoder ausgestattet, der automatisch die jeweilige Fernsehnorm detektiert. In dem Datenblatt "Valvo Technische Information, 830919" ist die Funktionsweise des Einchip-Multistandard-Farbdecoder TDA 4550 ausführlich beschrieben und erläutert. Die Kriterien zur Detektion der jeweiligen Fernsehnorm sind unterschiedlich. Beispielsweise ist aus der DE 39 21 731 A1 eine Anordnung zum Auswerten von Fernsehsignalen verschiedener Fernsehnormen bekannt, bei der der horizontale Synchronisierimpuls als Kriterium dient oder es ist aus der DE 39 25 325 A1 eine Kompensationsschaltung für eine Verzögerungszeit des Helligkeitssignals bekannt, bei der als Kriterium das gefilterte Farbsättigungssignal dient.

Da ein Multistandard-Farbdecoder möglichst viele Fernsehnormen verarbeiten soll, ist der Schaltungsaufwand hierfür relativ hoch, so daß ein solcher Farbdecoder häufig bei mehreren Fernsehempfänger-Generationen eingesetzt wird. Werden innerhalb eines Standards unterschiedliche Codier- und Decodierverfahren benutzt, kommt der Normumschaltung und Umschaltung der benutzten Signalverarbeitungsverfahren im Fernsehempfänger (Videorecorder) erhöhte Bedeutung zu.

Aus der DE 39 12 323 A1 der Anmelderin ist ein Farbfernsehsystem mit Einrichtungen zur Codierung und Decodierung von Farbfernsehsignalen bekannt, bei dem im sendeseitigen Farbfernsehcoder eine zeitliche Unterabtastung von Chrominanz- und hochfrequenter Luminanzkomponente vorgenommen wird. Im empfangsseitigen Decoder werden vom empfangenen ersten und zweiten Halbbild einerseits die hochfrequenten Signalanteile des übertragenen Farbfernsehsignals
(dadurch Beseitigung von Cross-Luminanz-Störungen) und andererseits die niederfrequenten Farbsignale addiert (dadurch Beseitigung von Cross-Colour-Störungen). Dieses Verfahren wird in neueren Veröffentlichungen als Colour-Plus-Codierung bezeichnet.

Bei diesem vorgeschlagenen PALplus-Farbfernseh-Übertragungssystem sind innerhalb eines Standards, insbesondere des PAL-Standards, zwei verschiedene Moden zur Trennung von Farb- und Luminanzkomponente vorhanden. Einerseits existiert ein Standardmodus, bei dem unter Verwendung von Notch-Filtern die Trennung erfolgt, andererseits existiert der Colour-Plus-Modus, bei dem unter Zusammenwirken der vorgenannten sender- und empfangsseitigen Maßnahmen und unter Einsatz digitaler Signalverarbeitungstechniken eine weitaus bessere Trennung bei gleichzeitiger Erhöhung der Auflösung erreicht wird.

Weiterhin werden bei dem PALplus-Fernsehsystem im Sender Statusbits erzeugt, die auf der Empfangsseite die entsprechende Auswahl des Signalverarbeitungsverfahrens (Algorithmus) steuern. Wird eine Colour-Plus-Encodierung im Sender durchgeführt, so wird dieses dem Empfänger über Statusbits mitgeteilt. Der Empfänger kann dann auf den entsprechenden Verarbeitungszweig der Decodierung umschalten. Umgekehrt erfolgt bei fehlender Colour-Plus-Verarbeitung im Sender eine Umschaltung auf den Notch-Filter-Decoder.

Diese Umschaltung funktioniert, solange das ankommende Bildsignal mit relativ geringen Zeitbasisschwankungen (in der Größenordnung bis zu 20 ns) behaftet ist. Dieser Toleranzbereich wird überschritten, wenn das empfangene PALplus-Farbfernsehsignal mit den entsprechenden Statusbits auf einen herkömmlichen Videorecorder (VHS- oder SVHS-Videorecorder oder 8mm-Videorecorder) aufgezeichnet wird. In diesem Fall bewirken die aufgezeichneten Statusbits, daß beispielsweise ein nach dem Verfahren der DE 39 12 323 A1 codiertes Signal vom Empfänger auch mit dem zugehörigen Decoder bearbeitet wird. Die durch den Videorecorder eingefügten Zeitbasisschwankungen führen jedoch dann zu starken Bildstörungen, insbesondere zu Schwankungen der Farbsättigung beim Farbfernsehempfänger.

Der Erfindung liegt die Aufgabe zugrunde, bei einem Farbfernsehsystem mit nach verschiedenen Signalverarbeitungsverfahren arbeitenden Coder und Decoder für Farbfernsehsignale, Schwankungen der Farbsättigung beim Farbfernsehempfänger weitgehend zu vermeiden.

Diese Aufgabe wird bei einem gattungsgemäßen Farbfernsehsystem erfindungsgemäß durch die Merkmale des Patentanspruchs 1 gelöst.

Dem erfindungsgemäßen Farbfernsehsystem liegt die Erkenntnis zugrunde, daß das in der DE 39 12 323 A1 beschriebene Signalverarbeitungsverfahren im empfangsseitigen Decoder fehlerhaft arbeitet, wenn vom Sender (wo die Statusbits gesetzt werden) bis zur digitalen Signalverarbeitung im Empfänger Zeitbasisfehler auftreten. Dies ist insbesondere bei Aufzeichnungen mit dem Videorecorder der Fall, aber auch wenn nach einem Programmwechsel die PLL-Schaltung noch nicht eingerastet ist. Für den Fall, daß Probleme mit dem Videorecorder-Betrieb vermieden werden sollen, kann als einfache Maßnahme im Empfänger implementiert werden, daß bei Anwahl des Eingangs, an dem das Videorecorder-Signal ansteht, automatisch der Colour-Plus-Modus deaktiviert wird. Hierbei können Schwankungen der Farbsättigung bis hin zum völligen Verschwinden der Farbe auftreten. Durch das erfindungsgemäße Farbfernsehsystem wird automatisch die jeweilige Umschaltung abhängig von den gemessenen Zeitbasisfehlern durchgeführt. Dadurch können auch unterschiedliche Systemoptionen automatisch erfaßt werden, beispielsweise die Nutzung eines Videorecorders über den HF-Eingang und einem beliebigen Programmplatz im Farbfernsehempfänger. Weiterhin wird durch die Verknüpfung der Detektion von Statusbits und Zeitbasisfehlern die Zuverlässigkeit der Normumschaltung und Umschaltung der Signalverarbeitungsverfahren erhöht.

Die Ausführungsform des Farbfernsehsystems gemäß Patentanspruch 2 weist den Vorteil auf, daß die ohnehin vorhandene PLL-Schaltung zur Erzeugung der Referenzsignale bei PAL- und NTSC-Decodierung mitbenutzt werden kann.

Die Ausführungsform der Auswerteschaltung gemäß Patentanspruch 3 erfordert lediglich einen geringen Schaltungsaufwand und ermöglicht die Realisierung kurzer Erkennungs- und Umschaltzeiten. Weiterhin ist durch die Benutzung handelsüblicher Bauelemente der digitalen Signalverarbeitungstechnik der universelle Einsatz und das Nachrüsten von Multistandard-Decodern möglich.

Durch das Einfügen der monostabilen Kippstufe nach Patentanspruch 4 wird die Sicherheit der Umschaltung noch weiter verbessert.

Die Erfindung wird im folgenden anhand einer in der Zeichnung dargestellten Ausführungsform näher beschrieben und erläutert. Es zeigt:
- Fig. 1: das Grundprinzip der Farbverarbeitung beim PALplus Farbfernsehsystem
- Fig. 2: das Blockschaltbild einer Ausführungsform zur Messung von Zeitbasisfehlern und
- Fig. 3: eine Ausführungsform der Auswerteschaltung nach Fig. 2.

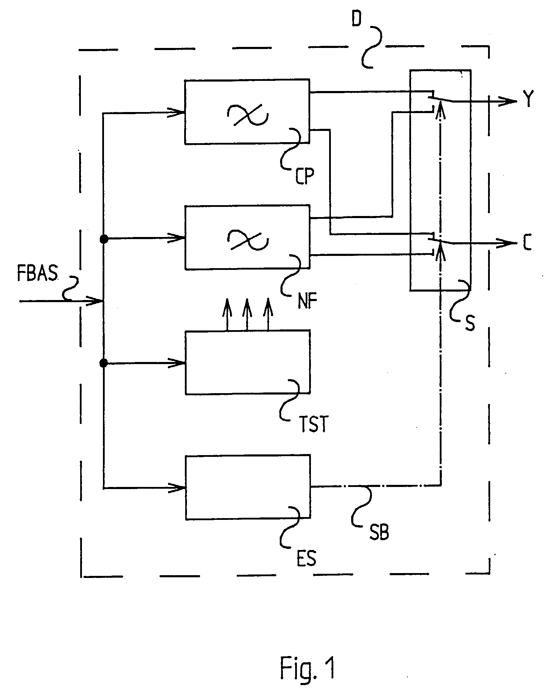

Fig. 1 zeigt das Grundprinzip der Farbverarbeitung beim PAlplus-Farbfernsehsystem, insbesondere einen Decoder D (Multistandard-Farbdecoder) zur automatischen Umschaltung des Signalverarbeitungsverfahrens des Decoders D (Standard des jeweils empfangenen Farb-Fernsehsignals).

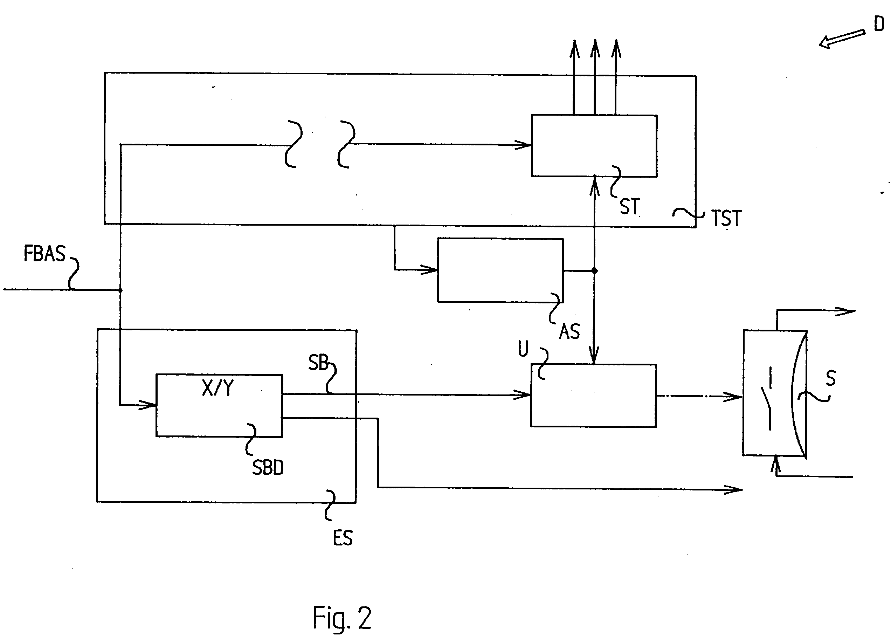

Beim PALplus-Farbfernsehsystem sind drei Bits (Steuersignale) zur Steuerung des Empfängers vorgesehen, welche in der Datenzeile übertragen werden; eines zur Bildformatänderung (Format 16 : 9/ 4 : 3 gemäß DE 38 43 215.3 A1), eines zur Flimmerreduktion (Umschaltung Filmmaterial/elektronisch produziertes Material gemäß DE 38 39 437.5 A1) und eines (Steuersignal SB) zur Umschaltung zwischen den verschiedenen Signalverarbeitungsverfahren (Umschaltung Standardcodierung/Colour-Plus-Codierung gemäß DE 39 12 323.0 A1). Im Decoder D ist hierzu eine Einrichtung ES angeordnet, welcher das FBAS-Signal zugeführt wird und welche mit einem Schalter S verbunden ist. Zur Trennung von Farb- und Luminanzkomponente sind weiterhin ein Notch-Filter-Decoder NF und ein Colour-Plus-Decoder CP vorgesehen, welche mit dem Schalter S verbunden sind. Schließlich enthält der Decoder D eine Schaltungsanordnung TST zur Lieferung von Taktsignalen (Burst-, Horizontal- und Vertikal-Austastimpuls) und Steuersignalen (Steuereinrichtung ST, siehe Fig. 2).

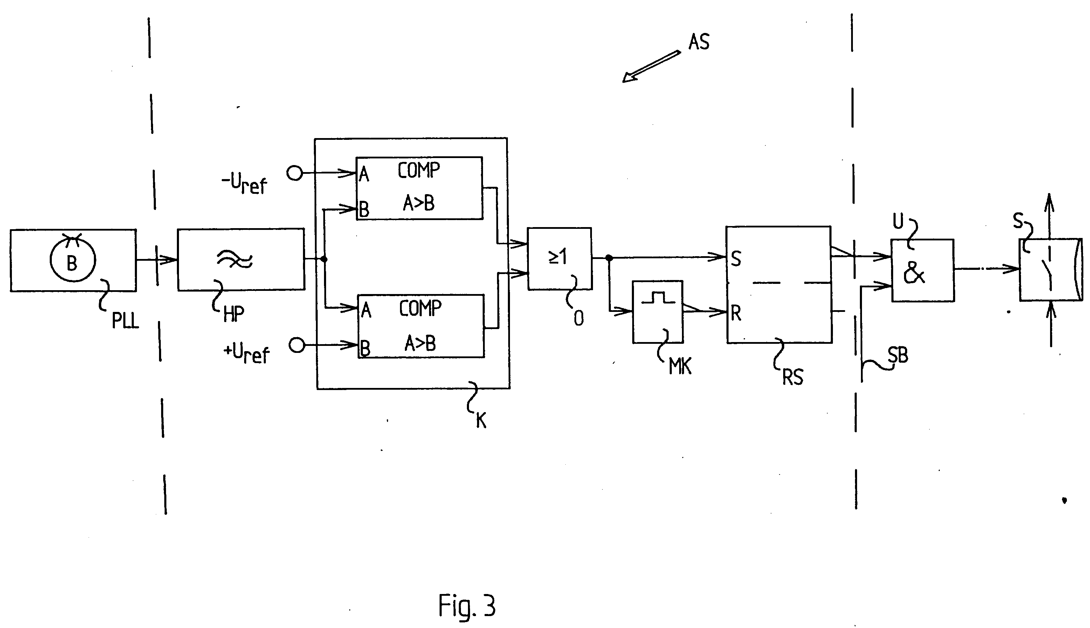

Fig. 2 zeigt das Blockschaltbild einer Ausführungsform zur Messung der Zeitbasisfehlern. Neben der Einrichtung ES zur Auswertung des Steuersignals SD ist erfindungsgemäß eine Auswerteschaltung AS vorgesehen. Die Auswerteschaltung AS steht mit der Steuereinrichtung ST (in TST) in Verbindung (über eine PLL-Schaltung PLL, s.a. Fig. 3). Mittels Steuereinrichtung ST, Einrichtung ES und Auswerteschaltung AS wird überprüft, ob das Steuersignal SB empfangen wird und ob die Zeitbasisschwankungen innerhalb eines vorgebbaren Toleranzintervalls liegen. Abhängig davon wird mittels Schalter S eine Umschaltung des Signalverarbeitungsverfahrens des Decoders D durchgeführt. Hierzu enthält die Einrichtung ES einen Statusbit-Decoder SBD, dessen Ausgang - ebenso wie der Ausgang der Auswerteschaltung AS - mit einem binären Schaltelement U verbunden ist.

Im einzelnen ist gemäß Fig. 3 die Auswerteschaltung AS zur Messung der Zeitbasis-Schwankungen mit einer PLL-Schaltung PLL (in TST) verbunden und mißt die PLL-Regelspannung. Am Ausgang der Auswerteschaltung AS ist der erste Eingang eines UND-Gliedes U angeschlossen, dessen zweiter Eingang mit der Einrichtung ES verbunden ist. Weiterhin weist die Auswerteschaltung AS einen Hochpaß HP mit einer Grenzfrequenz < 50 Hz auf, welchem die PLL-Regelspannung zugeführt wird und welcher mit einem Komparator K verbunden ist. Der Ausgang des Komparators K steht über ein ODER-Glied O und ein RS-Flip-Flop RS mit dem UND-Glied U in Verbindung.

Mit dem Ausgang des ODER-Glieds O ist eine monostabile Kippstufe MK verbunden. Deren Ausgang ist an dem Reset-Eingang des RS-Flip-Flops RS angeschlossen.

## Patentansprüche

1. Farbfernsehsystem mit Einrichtungen zur Codierung und Decodierung (D) von Farbfernsehsignalen, bei dem sende- und empfangsseitig nach Maßgabe eines Steuersignals (SB) im Farbfernsehsignal eine Umschaltung zwischen verschiedenen Signalverarbeitungsverfahren erfolgt, wobei empfangsseitig eine Einrichtung (ES) zur Auswertung des Steuersignals (SB) vorgesehen ist,
**dadurch gekennzeichnet**, daß
eine Auswerteschaltung (AS) vorgesehen ist, welche mit einer Steuereinrichtung (ST) in Verbindung steht, und welche Zeitbasis-Schwankungen im ankommenden Synchronsignal mißt, und daß mittels der Steuereinrichtung (ST), der Einrichtung (ES) zur Auswertung des Steuersignals und der Auswerteschaltung (AS) überprüft wird, ob das Steuersignal (SB) empfangen wird und ob die Zeitbasisschwankungen innerhalb eines vorgebbaren Toleranzintervalls liegen, und abhängig davon eine Umschaltung des Signalverarbeitungsverfahrens der Einrichtung zum Decodieren (D) durchgeführt wird.

2. Farbfernsehsystem nach Anspruch 1,
**dadurch gekennzeichnet,** daß
die Auswerteschaltung (AS) zur Messung der Zeitbasis-Schwankungen mit einer PLL-Schaltung (PLL) verbunden ist und die PLL-Regelspannung mißt und daß am Ausgang der Auswerteschaltung (AS) der erste Eingang eines UND-Gliedes (U) angeschlossen ist, dessen zweiter Eingang mit der Einrichtung (ES) verbunden ist.

3. Farbfernsehsystem nach Anspruch 2,
**dadurch gekennzeichnet,** daß
die Auswerteschaltung (AS) einen Hochpaß (HP) aufweist, welchem die PLL-Regelspannung zugeführt wird und welcher mit einem Komparator (K) verbunden ist und daß der Ausgang des Komparators (K) über ein ODER-Glied (O) und ein RS-Flip-Flop (RS) mit dem UND-Glied (U) in Verbindung steht.

4. Farbfernsehsystem nach Anspruch 3,
**dadurch gekennzeichnet,** daß
mit dem Ausgang des ODER-Glieds (O) eine monostabile Kippstufe (MK) verbunden ist, deren invertierender Ausgang mit dem Reset-Eingang des RS-Flip-Flops (RS) verbunden ist.

## Claims

1. Colour television system with devices for coding and decoding (D) colour television signals, in which, depending on a control signal (SB) in the colour television signal, a switchover takes place at the transmitting end and receiving end between different colour signal processing methods, a device (ES) being provided at the receiving end for the evaluation of the control signal (SB),
characterized in that an evaluation circuit (AS) is provided which is connected to a control device (ST) and which measures time-base fluctuations in the incoming synchronization signal, and in that, by means of the control device (ST) of the device (ES) for the evaluation of the control signal and of the evaluation circuit (AS), a check is made on whether the control signal (SB) is being received and whether the time-base fluctuations are within a specified tolerance interval and, depending thereon, a switchover of the colour signal processing method of the device for decoding (D) is carried out.

2. Colour television system according to Claim 1,
characterized in that the evaluation circuit (AS) for measuring the time-base fluctuations is connected to a PLL circuit (PLL) and measures the PLL control voltage and in that the first input of an AND element (U), whose second input is connected to the device (ES), is connected at the output of the evaluation circuit (AS).

3. Colour television system according to Claim 2,
characterized in that the evaluation circuit (AS) has a high-pass filter (HP) to which the PLL control voltage is fed and which is connected to a comparator (K) and in that the output of the comparator (K) is connected to the AND element (U) via an OR element (O) and an RS flip-flop (RS).

4. Colour television system according to Claim 3,
characterized in that a monostable flip-flop (MK), whose inverting output is connected to the reset input of the RS flip-flop (RS), is connected to the output of the OR element (O).

## Revendications

1. Système de télévision couleurs comprenant des dispositifs pour le codage et décodage (D) de signaux de télévision couleurs, dans lequel du côté émission et du côté réception, en fonction d'un signal de commande (SB) compris dans le signal de télévision couleurs, une commutation s'effectue entre différents procédés de traitement de signal, un dispositif (ES) pour l'exploitation du signal de commande (SE) étant révu du côté réception, caractérisé en ce qu'un circuit d'exploitation (AS) est prévu qui est en liaison avec un dispositif de commande (ST), et qui mesure les fluctuations de base de temps des signaux de synchronisation arrivants, et en ce qu'au moyen du dispositif de commande (ST), du dispositif (ES) pour l'exploitation du signal de commande et du circuit d'exploitation (AS), on examine si le signal de commande (SE) est reçu et si les fluctuations de base de temps se situent à l'intérieur d'un interval de tolérance pouvant être prédéfini, et, en fonction du résultat, une commutation du procédé de traitement de signal du dispositif de décodage (D) est effectué.

2. Système de télévision couleurs selon la revendication 1, caractérisé en ce que, pour la mesure des fluctuations de base de temps, le circuit d'exploitation (AS) est relié à un circuit PLL (PLL) et mesure la tension de régulation PLL, et en ce que la première entrée d'un circuit ET (U) est connectée à la sortie du circuit d'exploitation (AS), la seconde entrée du circuit ET étant reliée au dispositif (ES).

3. Système de télévision couleurs selon la revendication 2, caractérisé en ce que le circuit d'exploitation (AS) présente un filtre passe-haut (HP) auquel est amenée la tension de régulation PLL et qui est relié à un comparateur (K), et en ce que la sortie du comparateur (K) est en liaison avec le circuit ET (U) par l'intermédiaire d'un circuit OU (O) et d'une bascule RS (RS).

4. Système de télévision couleurs selon la revendication 3, caractérise en ce qu'une bascule électronique monostable est reliée à la sortie du circuit OU (O), dont la sortie inverseuse est reliée à l'entrée de mise à zero de la bascule RS (RS).
